# EUROPÄISCHE PATENTSCHRIFT

(11) **EP 3 235 109 B1**
(45) Veröffentlichungstag und Bekanntmachung des Hinweises auf die Patenterteilung: **21.04.2021**
(21) Anmeldenummer: 15813263.9
(22) Anmeldetag: 03.12.2015
(51) Int. Cl.: H02K 7/102, H02K 5/20, H02K 9/19, F16D 59/02, F16D 121/22

(54) **ELEKTROMOTOR MIT ELEKTROMAGNETISCH BETÄTIGBARER BREMSE**
ELECTRIC MOTOR COMPRISING AN ELECTROMAGNETICALLY ACTUATED BRAKE
MOTEUR ÉLECTRIQUE À FREIN À ACTIONNEMENT ÉLECTROMAGNÉTIQUE

(30) Priorität: 18.12.2014 DE 102014018685
(43) Veröffentlichungstag der Anmeldung: 25.10.2017
(73) Patentinhaber: SEW-EURODRIVE GmbH & Co. KG, 76646 Bruchsal (DE)
(72) Erfinder: WILGING, Klaus, 76297 Stutensee (DE)
(86) Internationale Anmeldenummer: PCT/EP2015/002443
(87) Internationale Veröffentlichungsnummer: WO 2016/096100

(56) Entgegenhaltungen:
- EP-A2- 0 326 966
- GB-A- 470 607
- US-A- 2 607 445

## Beschreibung

Die Erfindung betrifft einen Elektromotor mit elektromagnetisch betätigbarer Bremse.

Ein Bremsmotor ist ein Elektromotor mit elektromagnetisch betätigbarer Bremse.

**Aus der** EP 2 445 090 A1 **ist eine dynamoelektrische Maschine mit Haltebremsvorrichtung bekannt, wobei der Motor Kühlkanäle aufweist, die in einem Verteilerkanal münden, der in einem Gehäuseteil des Motors angeordnet ist, wobei die Bremse einen Spulenkörper aufweist, wobei eine Rohrleitung in den Verteilerkanal mündet.**

**Aus der** US 2014/0077633 A1 **ist ein Fahrzeug bekannt.**

**Aus der** DE 44 42 867 A1 **ist eine Antriebsanordnung für ein Straßenfahrzeug bekannt.**

**Aus der** DE 10 2013 210 559 A1 **ist eine Motor-Generator-Einheit bekannt.**

**Aus der** DE 10 2012 001 701 B3 **ist eine Federdruckbremse mit einem Magnetgehäuse bekannt.**

**Aus der** US 2 607 445 A **ist als ncähstliegender Stand der Technik ein Elektromotor mit Bremsmechanismus bekannt.**

**Aus der** GB 470 607 A **ist ein Motor mit einer Kühlung bekannt.**

**Aus der** EP 0 326 966 A2 **ist eine elektromagnetische Federdruckbremse bekannt.**

Der Erfindung liegt daher die Aufgabe zugrunde, einen Bremsmotor weiterzubilden, wobei dieser möglichst kompakt ausgeführt sein soll

Erfindungsgemäß wird die Aufgabe bei dem Elektromotor mit elektromagnetisch betätigbarer Bremse nach den in Anspruch 1 angegebenen Merkmalen gelöst.

Wichtige Merkmale der Erfindung bei dem Elektromotor mit elektromagnetisch betätigbarer Bremse sind, dass der Motor Kühlkanäle aufweist, die in einen Verteilerkanal münden, der in einem Gehäuseteil des Motors angeordnet ist,
wobei die Bremse einen Spulenkörper, also Magnetkörper aufweist, in welchem eine elektrisch bestrombare Spule aufgenommen ist,
**wobei** eine Rohrleitung in den Verteilerkanal mündet, welche durch eine Bohrung des Spulenkörpers geführt ist.

Von Vorteil ist dabei, dass die Kühlmittelzufuhr von der B-Seite aus, also gegenüberliegend von der Abtriebsseite, also A-Seite, ausführbar ist. Von dort sind auch die elektrischen Anschlüsse betätigbar. Somit ist eine sehr geringe radiale Ausdehnung des Motors erreichbar. Die Bremse ist somit nur mit Ausnehmungen für die Ölzufuhr auszustatten. Bei einer vorteilhaften Ausgestaltung ist die Rohrleitung mit dem Spulenkörper schraubverbunden,

insbesondere wobei die Rohrleitung einen Außengewindeabschnitt aufweist, der eingeschraubt ist in einen Innengewindeabschnitt des Spulenkörpers. Von Vorteil ist dabei, dass die Rohrleitung am Spulenkörper befestigt ist. Außerdem ist die Rohrleitung ins Gehäuseteil eingesteckt und somit ist die Rohrleitung an zwei voneinander axial beabstandeten Stellen gelagert.

Bei einer vorteilhaften Ausgestaltung ist der Verteilerkanal auf der der Statorwicklung zugewandten Seite, insbesondere axialen Seite, angeordnet,
wobei die Rohrleitung durch eine Ausnehmung des Gehäuseteils geführt ist, welche auf der vom Verteilerkanal abgewandten Seite des Gehäuseteils angeordnet ist oder zur Bremse hin mündet. Von Vorteil ist dabei, dass eine kompakte Ausführung des Motors erreichbar ist, indem die Kühlmittelzufuhr von der einen axialen Seite zur anderen axialen Seite ausführbar ist.

Die Rohrleitung ist mittels Dichtung, insbesondere O-Ring, mit dem Gehäuseteil verbunden. Von Vorteil ist dabei, dass eine Abdichtung in einfacher Weise erreichbar ist.

Ein Zwischenteil umgibt eine Ankerscheibe der Bremse und einen Bremsbelagträger der Bremse gehäusebildend insbesondere radial und weist eine axial durchgehende Bohrung auf, durch welche eine Rohrleitung hindurchgeführt ist,
wobei die Bohrung koaxial ausgerichtet ist zur durch den Spulenkörper durchgehenden Bohrung, durch welche die Rohrleitung ebenfalls hindurchgeführt ist. Von Vorteil ist dabei, dass der Abstand zwischen Spulenkörper und Gehäuseteil festlegbar ist durch das Zwischenteil. Die Rohrleitung ist außerdem durch eine axial durchgehende Ausnehmung, insbesondere Bohrung, im Zwischenteil geführt.

Bei einer vorteilhaften Ausgestaltung ist das Zwischenteil aus Aluminium und das Gehäuseteil aus Stahl gefertigt,
wobei der Spulenkörper aus ferromagnetischem Material gefertigt ist. Von Vorteil ist dabei, dass Aluminium magnetische Wechselfelder abschirmt und den magnetischen Fluss des Gleichfeldes nicht umleitet.

Bei einer vorteilhaften Ausgestaltung ist der Verteilerkanal auf größerem Radialabstand angeordnet als das vom den Verteilerkanal aufweisenden Gehäuseteil aufgenommene Lager der Rotorwelle. Von Vorteil ist dabei, dass die vom Verteilerkanal gespeisten Kühlkanäle auf größerem Radialabstand anordenbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

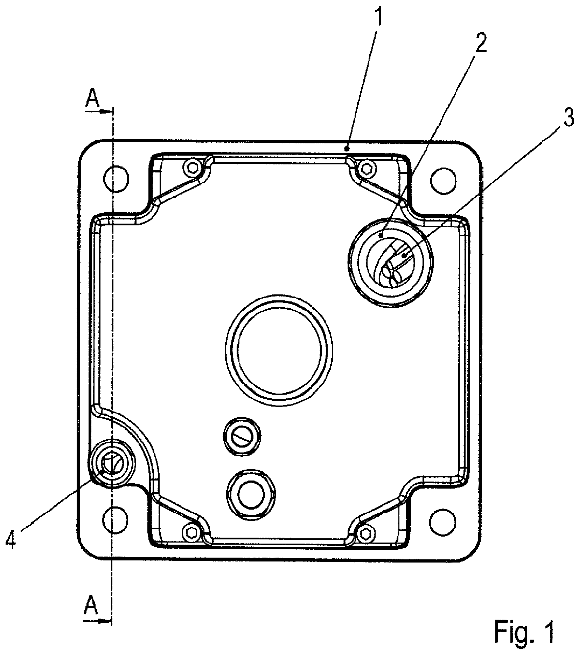

In der Figur 1 ist die Draufsicht auf einen erfindungsgemäßen Elektromotor gezeigt.

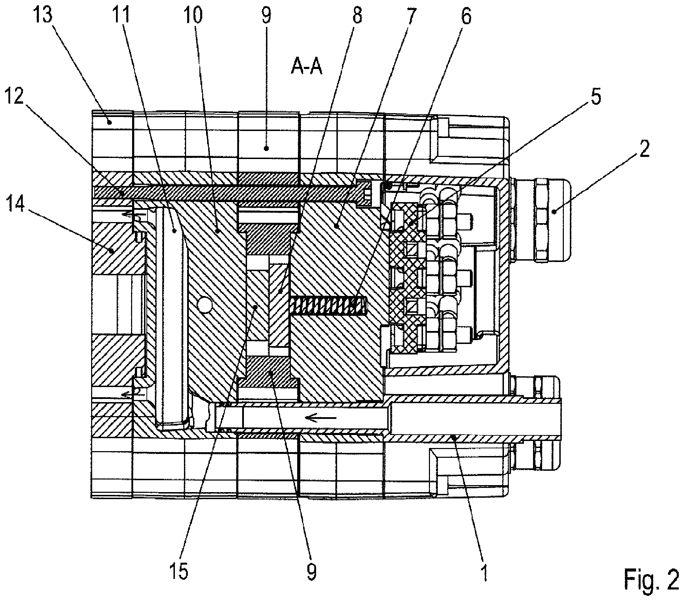

In der Figur 2 ist ein zugehöriger Schnitt entlang der in Figur 1 gekennzeichneten Linie gezeigt.

Wie in den Figuren dargestellt, weist das Gehäuse des Elektromotors ein Gehäuseteil 1 auf, welches den elektrischen Anschlussbereich gehäusebildend umgibt.

Hierzu ist im metallischen Gehäuseteil 1 eine durchgehende Ausnehmung ausgeführt, in welcher ein Kabeldurchführungsteil 2, insbesondere Kabelverschraubung, angeordnet ist, so dass ein Kabel 3 von der äußeren Umgebung des Elektromotors in den elektrischen Anschlussbereich führbar ist und dort mit einer Anschlussvorrichtung 5 verbunden ist, mit welcher auch die Statorwicklungsdrahtendabschnitte verbunden sind. Somit ist die Verschaltung, also beispielsweise Sternschaltung oder Dreieckschaltung, des Motors mittels der Anschlussvorrichtung 5 vorgebbar.

Außerdem weist das Gehäuseteil 1 eine weitere durchgehende Ausnehmung auf, durch welche eine Rohrleitung durchgeführt ist.

Mit dem Gehäuseteil 1 ist ein Spulenkörper 7, insbesondere also Magnetkörper, einer elektromagnetisch betätigbaren Bremse fest verbunden.

Der Elektromotor weist eine Rotorwelle 14 auf, die über Lager im Gehäuse gelagert. Das Gehäuse umfasst ein Gehäuseteil 13, insbesondere Statorgehäuse, welches axial beidseitig mit einem weiteren Gehäuseteil 10, insbesondere Lagerschild, fest verbunden ist.

Zwischen dem als Lagerschild fungierenden weiteren Gehäuseteil 10 und dem Spulenkörper 7, der aus einem ferromagnetischen Stahlguss, wie GGG, gefertigt ist, ist ein Zwischenteil 9 angeordnet.

Die genannte feste Verbindung wird mittels einer Verbindungsschraube 12 ausgeführt, welche durch das als Statorgehäuseteil fungierende Gehäuseteil 13, durch das Zwischenteil 9 und den Spulenkörper 7 geführt ist und diese axial aufeinander zu drückt.

Das Zwischenteil 9 ist vorzugswiese aus Aluminium, die anderen Gehäuseteile (13, 1) aus Stahl oder Stahlguss.

Eine Ankerscheibe 8 ist drehfest aber axial verschiebbar mit dem Spulenkörper 7 verbunden, wobei Führungselemente die axiale Führung bewirken.

Im Spulenkörper 7 ist eine bestrombare Spule in einer Ringnut des Spulenkörpers 7 aufgenommen, wobei die Ringachse der Ringnut koaxial zur Achse der Rotorwelle 14 ausgerichtet ist.

Die Ankerscheibe 8 wird bei Bestromung der Spule zum Spulenkörper 7 hingezogen entgegen der von einem Federelement 6 erzeugten Federkraft, wobei das Federelement 6 abgestützt ist am Spulenkörper 7 und auf die Ankerscheibe 8 drückt.

Drehfest aber axial verschiebbar auf der Rotorwelle 14 ist ein Bremsbelagträger 15 zwischen Ankerscheibe 8 und Gehäuseteil 10 angeordnet, das auch eine Gegenbremsfläche aufweist.

Bei Nichtbestromung der Spule wird die Ankerscheibe 8 auf den Bremsbelagträger 15 gedrückt und dieser dann auf die Gegenbremsfläche.

Im Gehäuseteil 10 ist ein ringförmiger Verteilerkanal 11 angeordnet, aus dem Kühlkanäle mit einem Kühlmedium speisbar sind, die axial durch den Stator geführt sind. Die Kühlkanäle sind in Umfangsrichtung voneinander vorzugsweise regelmäßig beabstandet und münden in den ringförmigen Verteilerkanal 11.

Die Rohrleitung 4 weist einen Außengewindeabschnitt auf, der mit einem Innengewindeabschnitt einer axial durch den Spulenkörper 7 durchgehenden Bohrung schraubverbunden ist. Die Rohrleitung 4 mündet in den ringförmigen Verteilerkanal 11. Die Rohrleitung 4 ist durch eine Bohrung im Zwischenteil hindurchgeführt.

Somit ist also der Motor, insbesondere der Bereich des Stators mit einem Kühlmedium kühlbar, wie Öl oder Wasser.

Im in der Figur nicht gezeigten weiteren Lagerschild, welches auf der von der Bremse axial abgewandten Seite des Motors angeordnet ist, ist ebenfalls ein ringförmiger Verteilerkanal angeordnet, in welchen die Kühlkanäle münden und von dem dann durch eine weitere Rohrleitung das Kühlmedium aus dem Motor herausführbar ist.

Auf diese Weise ist der Motor flüssigkeitsgekühlt betreibbar, wobei der Motor als Bremsmotor ausgeführt ist und die Bremse trotzdem sehr kompakt bleibt. Denn die Durchführung der Rohrleitung 4 von der B-Seite, also einem axialen Endbereich, her, benötigt kein weiteres Bauvolumen. Die Rohrleitung 4 erstreckt sich axial und geradlinig. Sie muss also nicht gebogen werden.

Somit ist die Kühlmittelzufuhr von der B-Seite aus ausführbar. Ebenso sind die elektrischen Anschlüsse von der B-Seite aus betätigbar. Denn die Funktion des Anschlusskastens ist axial hinter der Bremse angeordnet. Auf der vom Stator axial abgewandten Seite der Bremse, insbesondere des Spulenkörpers 7, sind also elektrische Anschlussvorrichtungen und Kühlmittelzufuhr angeordnet.

Somit ist die radiale Ausdehnung des Motors gering.

Die Rohrleitung 4 ist in dem von der Anschlussvorrichtung 5 überdeckten axialen Bereich mit einem größeren Querschnitt ausgeführt als in dem vom Spulenkörper 7 überdeckten axialen Bereich.

Die Rohrleitung 4 ist also von der Gehäuseoberfläche zum Gehäuseteil 10 hin verjüngt ausgeführt.

Die Rohrleitung 4 ist in eine Ausnehmung des Gehäuseteils 10 eingesteckt und mittels Dichtungen, wie O-Ring, zum Gehäuseteil 10 hin abgedichtet. Die Ausnehmung mündet in den ringförmigen Verteilerkanal 11.

Die Kabelverschraubung 2, also die Herausführung der elektrischen Leitungen, ist auf einem nicht verschwindenden Radialabstand angeordnet und in Umfangsrichtung von der Rohrleitung 4 beabstandet, die auf gleichem oder ähnlichem Radialabstand angeordnet ist oder sein darf.

Die Rohrleitung 4 ist als Rohrteil ausführbar, beispielsweise aus Kupfer. Das Rohrteil ist auch mehrstückig ausführbar, wobei dann die Teile miteinander dicht verbunden werden müssen.

### Bezugszeichenliste

1 Gehäuseteil
2 Kabeldurchführungsteil, insbesondere Kabelverschraubung
3 Kabel
4 Rohrleitung
5 Anschlussvorrichtung
6 Federelement
7 Spulenkörper, insbesondere Magnetkörper
8 Ankerscheibe
9 Zwischenteil
10 Gehäuseteil, insbesondere Lagerschild
11 ringförmiger Verteilerkanal
12 Verbindungsschraube
13 Gehäuseteil
14 Rotor
15 Bremsbelagträger

## Patentansprüche

1. Elektromotor mit elektromagnetisch betätigbarer Bremse,
wobei der Motor Kühlkanäle aufweist, wobei die Bremse einen Spulenkörper (7), **also** Magnetkörper, aufweist, in welchem eine elektrisch bestrombare Spule aufgenommen ist,
**gekennzeichnet dadurch,**
**dass** der Motor flüssigkeitsgekühlt ist,
die Kühlkanäle in einen Verteilerkanal (11) münden, der in einem Gehäuseteil (10) des Motors angeordnet sind, und eine Rohrleitung (4) in den Verteilerkanal (11) mündet, welche durch eine Bohrung des Spulenkörpers (7) geführt ist,
**wobei ein Zwischenteil (9) eine Ankerscheibe (8) der Bremse und einen Bremsbelagträger (15) der Bremse gehäusebildend radial umgibt und eine axial durchgehende Bohrung aufweist, durch welche** die Rohrleitung **(4) hindurchgeführt ist, wobei die Bohrung koaxial ausgerichtet ist zur durch den Spulenkörper (7) durchgehenden Bohrung, durch welche** die Rohrleitung **(4) ebenfalls hindurchgeführt ist,**
**wobei die Rohrleitung (4) in eine Ausnehmung des Gehäuseteils (10) eingesteckt ist und mittels Dichtungen zum Gehäuseteil (10) hin abgedichtet ist.**

2. **Elektromotor nach Anspruch 1,**
**dadurch gekennzeichnet, dass**
**die Rohrleitung (4) von der Gehäuseoberfläche zum Gehäuseteil (10) hin verjüngt** ausgeführt ist.

3. **Elektromotor nach mindestens einem der vorangegangenen Ansprüche,**
**dadurch gekennzeichnet, dass**
**die Rohrleitung (4) aus Kupfer ausgeführt ist.**

4. Elektromotor nach mindestens einem der vorangegangenen Ansprüche,
**dadurch gekennzeichnet, dass**
die Rohrleitung (4) mit dem Spulenkörper (7) schraubverbunden ist, insbesondere wobei die Rohrleitung (4) einen Außengewindeabschnitt aufweist, der eingeschraubt ist in einen Innengewindeabschnitt des Spulenkörpers (7).

5. Elektromotor nach mindestens einem der vorangegangenen Ansprüche,
**dadurch gekennzeichnet, dass**
der Verteilerkanal (11) auf der der Statorwicklung zugewandten Seite, insbesondere axialen Seite, angeordnet ist,
wobei die Rohrleitung (4) durch eine Ausnehmung des Gehäuseteils (10) geführt ist, welche auf der vom Verteilerkanal (11) abgewandten Seite des Gehäuseteils (10) angeordnet ist oder zur Bremse hin mündet.

6. Elektromotor nach mindestens einem der vorangegangenen Ansprüche,
**dadurch gekennzeichnet, dass**
die Dichtung ein O-Ring

7. Elektromotor nach mindestens einem der vorangegangenen Ansprüche,
**dadurch gekennzeichnet, dass**
das Zwischenteil (9) aus Aluminium und das Gehäuseteil (10) aus Stahl gefertigt ist, wobei der Spulenkörper (7) aus ferromagnetischem Material gefertigt ist.

8. Elektromotor nach mindestens einem der vorangegangenen Ansprüche, **dadurch gekennzeichnet, dass**
der Verteilerkanal (11) auf größerem Radialabstand angeordnet ist als das von dem Verteilerkanal (11) aufweisenden Gehäuseteil (10) aufgenommene Lager der Rotorwelle.

9. Elektromotor nach mindestens einem der vorangegangenen Ansprüche, **dadurch gekennzeichnet, dass**
die Rohrleitung (4) als Rohrteil, insbesondere als einteiliges oder mehrteiliges Rohrteil, ausgeführt ist.

## Claims

1. An electric motor with an electromagnetically actuatable brake,
wherein the motor has cooling channels,
wherein the brake has a coil former (7), therefore magnetic body, in which there is received a coil able to be supplied with electric current,
**characterised in that**
the motor is liquid-cooled,
the cooling channels open into a distribution channel (11), arranged in a housing part (10) of the motor, and
a conduit (4) opens into the distribution channel (11) and is guided through a bore of the coil former (7),
wherein an intermediate part (9) radially surrounds an armature plate (8) of the brake and a brake lining carrier (15) of the brake in a housing-forming manner and has an axially through-passing bore through which the conduit (4) is guided,
wherein the bore is oriented coaxially with the bore passing though the coil former (7), through which the conduit (4) is likewise guided,
wherein the conduit (4) is inserted into a cut-out of the housing part (10) and is sealed with respect to the housing part (10) by means of seals.

2. An electric motor according to claim 1,
**characterised in that**
the conduit (4) is configured to taper from the housing surface towards the housing part (10).

3. An electric motor according to at least one of the preceding claims,
**characterised in that**
the conduit (4) is made of copper.

4. An electric motor according to at least one of the preceding claims,
**characterised in that**
the conduit (4) is screw-connected to the coil former (7),
in particular wherein the conduit (4) has an externally threaded portion which is screwed into an internally threaded portion of the coil former (7).

5. An electric motor according to at least one of the preceding claims,
**characterised in that**
the distribution channel (11) is arranged on the side, in particular axial side, facing the stator winding,
wherein the conduit (4) is guided through a cut-out of the housing part (10), which cut-out is arranged on that side of the housing part (10) facing away from the distribution channel (11) or opens towards the brake.

6. An electric motor according to at least one of the preceding claims,
**characterised in that**
the seal is an O-ring.

7. An electric motor according to at least one of the preceding claims,
**characterised in that**
the intermediate part (9) is manufactured from aluminium and the housing part (10) from steel,
wherein the coil former (7) is manufactured from ferromagnetic material.

8. An electric motor according to at least one of the preceding claims,
**characterised in that**
the distribution channel (11) is arranged at a greater radial spacing than the rotor-shaft bearing received by the housing part (10) having the distribution channel (11).

9. An electric motor according to at least one of the preceding claims,
**characterised in that**
the conduit (4) is in the form of a pipe part, in particular a one-part or multi-part pipe part.

## Revendications

1. Moteur électrique avec frein à commande électromagnétique,
dans lequel le moteur présente des canaux de refroidissement,
dans lequel le frein présente un corps de bobine (7), donc un corps magnétique, dans lequel est reçue une bobine pouvant être alimentée en courant électrique,
**caractérisé en ce**
**que** le moteur est refroidi par liquide,
les canaux de refroidissement débouchent dans un canal de distribution (11) qui est disposé dans une partie de boîtier (10) du moteur, et
une tuyauterie (4) débouche dans le canal de distribution (11), laquelle est passée à travers un alésage du corps de bobine (7),
dans lequel une partie intermédiaire (9) entoure radialement un disque d'induit (8) du frein et un support de garniture de frein (15) du frein en formant un boîtier et présente un alésage axial continu à travers lequel la tuyauterie (4) est passée,
dans lequel l'alésage est orienté coaxialement à l'alésage traversant le corps de bobine (7), à travers lequel la tuyauterie (4) est également passée,
dans lequel la tuyauterie (4) est insérée dans un évidement de la partie de boîtier (10) et est rendue étanche par rapport à la partie de boîtier (10) au moyen de joints.

2. Moteur électrique selon la revendication 1,
**caractérisé en ce**
**que** la tuyauterie (4) est réalisée effilée de la surface de boîtier vers la partie de boîtier (10).

3. Moteur électrique selon au moins l'une des revendications précédentes,
**caractérisé en ce**
**que** la tuyauterie (4) est réalisée en cuivre.

4. Moteur électrique selon au moins l'une des revendications précédentes,
**caractérisé en ce**
**que** la tuyauterie (4) est reliée par vissage au corps de bobine (7),
en particulier dans lequel la tuyauterie (4) présente une section filetée extérieure qui est vissée dans une section filetée intérieure du corps de bobine (7).

5. Moteur électrique selon au moins l'une des revendications précédentes,
**caractérisé en ce**
**que** le canal de distribution (11) est disposé sur le côté tourné vers l'enroulement statorique, en particulier le côté axial,
dans lequel la tuyauterie (4) est passée à travers un évidement de la partie de boîtier (1) qui est disposé sur le côté de la partie de boîtier (1) opposé au canal de distribution (11) ou débouche vers le frein.

6. Moteur électrique selon au moins l'une des revendications précédentes,
**caractérisé en ce**
**que** le joint est un joint torique.

7. Moteur électrique selon au moins l'une des revendications précédentes,
**caractérisé en ce**
**que** la partie intermédiaire (9) est fabriquée en aluminium et la partie de boîtier (1) en acier,
dans lequel le corps de bobine (7) est fabriqué dans un matériau ferromagnétique.

8. Moteur électrique selon au moins l'une des revendications précédentes,
**caractérisé en ce**
**que** le canal de distribution (11) est disposé à une distance radiale plus grande que le palier de l'arbre de rotor reçu par la partie de boîtier (1) présentant le canal de distribution (11).

9. Moteur électrique selon au moins l'une des revendications précédentes,
**caractérisé en ce**
**que** la tuyauterie (4) est réalisée sous la forme d'une partie tubulaire, en particulier sous la forme d'une partie tubulaire en une ou plusieurs parties.
